# EUROPEAN PATENT SPECIFICATION

(11) **EP 2 738 244 B1**
(45) Date of publication and mention of the grant of the patent: **20.03.2019**
(21) Application number: 12815057.0
(22) Date of filing: 11.07.2012
(51) Int. Cl.: C11B 9/00, B01J 20/28, A24D 3/16, A24D 3/14, A23L 27/00, B01J 20/32, B01J 20/22, B01J 20/18, B01J 20/20, B01J 20/30, B01J 20/34, B01J 20/24, B01J 20/10, A24D 3/04

(54) **FLAVORANT-CARRYING ADSORBENT PARTICLE, CIGARETTE FILTER, FILTER-TIPPED CIGARETTE, AND METHOD FOR PRODUCING FLAVORANT-CARRYING ADSORBENT PARTICLE**
DUFTSTOFFTRAGENDES ADSORPTIONSTEILCHEN, ZIGARETTE MIT FILTERSPITZE UND VERFAHREN ZUR HERSTELLUNG DES DUFTSTOFFTRAGENDEN ADSORPTIONSTEILCHENS
PARTICULES ADSORBANTES SUPPORT DE PARFUM, FILTRE DE CIGARETTE, ET PROCÉDÉ DE FABRICATION DE CES PARTICULES

(30) Priority: 15.07.2011 JP 2011157215
(43) Date of publication of application: 04.06.2014
(73) Proprietor: Japan Tobacco Inc., Tokyo 105-8422 (JP)
(72) Inventor: FUJITA, Ryoji, 130-8603 Tokyo (JP); INAGAKI, Michihiro, 130-8603 Tokyo (JP); CHIDA, Masahiro, 130-8603 Tokyo (JP); SUGYO, Mitsuharu, 130-8603 Tokyo (JP); MUTO, Hiromichi, 130-8603 Tokyo (JP); SASAKAWA, Kiyohiro, 130-8603 Tokyo (JP)
(74) Representative: Isarpatent
(86) International application number: PCT/JP2012/067724
(87) International publication number: WO 2013/011898

(56) References cited:
- EP-A1- 2 366 296
- WO-A1-2008/072627
- WO-A1-2008/072627
- WO-A1-2009/157240
- WO-A1-2010/079793
- WO-A1-2010/079793
- JP-A- 2005 536 221
- JP-A- 2006 248 832
- JP-A- 2006 507 824
- JP-A- 2008 156 791
- JP-A- 2009 012 996
- JP-A- 2010 505 423
- JP-B- 43 028 077
- US-A1- 2004 040 565
- US-A1- 2007 003 492
- US-A1- 2008 053 469

## Description

### Technical Field

The present invention relates to a method for producing a flavorant-carrying adsorbent particle.

### Background Art

Flavorant-carrying activated carbon particles are embedded in a cigarette filter, flavor from the flavorant is emitted in the mainstream smoke of a cigarette, and the smoker enjoys the flavor. For example, Patent Document 1 discloses a flavor bead in which the surface of a particulate carrier such as activated carbon is covered with a glucan film containing a flavorant. This flavor bead is produced according to the following process. A particulate carrier is put into a fluidized-bed granulation dryer, and an aqueous glucan solution or dispersion containing a flavorant is continuously or intermittently sprayed onto the surface of the particulate carrier while blowing warm air of e.g. 80°C or lower into the dryer, followed by drying.

However, in the method of Patent Document 1, it takes a relatively long time when a large amount of a flavorant is subjected to the treatment. As a result, it is difficult to increase the amount of a flavorant carried.

### Prior Art Document

### Patent Document

Patent Document 1: WO 2008/072627

US 2007/003492 A1 relates to a substance-supporting porous silica, wherein a porous silica supports a substance selected from the group consisting of menthols, volatile substances, thermal substances, plant polyphenols and organic colorants.

US 2008/053469 A1 discloses a smoking article such as a cigarette comprising a tobacco rod and a filter component having a cavity filled with spherical beaded carbon.

WO 2010/079793 A1 describes a cigarette filter comprising a filter body and flavor granules added to the filter body, wherein the flavor granules each comprise a core material and a flavor-carrying carrier adhered to the surface of the core material, and wherein the flavor granules have a grain size distribution such that granules having a grain size of 100 µm or larger make up 99% by mass or more of the flavor granules and granules having a grain size of 200 µm or larger make up 70% by mass or more of the flavor granules.

US 2004/040565 A1 provides cigarette filters, methods for making cigarettes and methods for smoking cigarettes, which involve the use of an unfunctionalized porous polyaromatic resin, which is capable of removing at least some of at least one gas phase constituent from mainstream smoke through sorption.

### Summary of Invention

### Problem to be solved by the Invention

Described is a flavorant-carrying adsorbent particle carrying a relatively large amount of a flavorant by a treatment in a relatively short time.

Described is also a cigarette filter comprising the flavorant-carrying adsorbent particle, and a cigarette tipped with the filter.

An object of the present invention is to provide a method for producing a flavorant-carrying adsorbent particle.

### Means for solving the Problem

Described is a flavorant-carrying adsorbent particle comprising an adsorbent core particle having a BET specific surface area of 700 m²/g or greater, and a flavor-generating medium carried on the surface of the adsorbent core particle and including a flavorant and a flavorant-holding material holding the flavorant, wherein the flavorant-holding material is present in an amount of 5 to 20% with respect to a total weight of the flavorant-carrying adsorbent particle, and the flavorant is present in an amount of 10 to 50% with respect to a weight of the flavorant-holding material.

Further described is a cigarette filter comprising a filter section including the flavorant-carrying adsorbent particle described above. Further described is a filter-tipped cigarette comprising a cigarette rod and the filter described above which is connected to one end of the cigarette rod.

According to the present invention, there is provided a method for producing a flavorant-carrying adsorbent particle, comprising spraying a liquid flavor-emitting composition containing a flavorant and glucan onto an adsorbent core particle having a BET specific surface area of 700 m²/g or greater while stirring the adsorbent core particle under reduced pressure.

### Effects of the Invention

According to the present invention, a flavorant-carrying adsorbent particle carrying a relatively large amount of a flavorant is provided by a treatment in a relatively short time.

### Brief Description of Drawings

FIG. 1 is a schematic cross-sectional view illustrating an example of an apparatus for producing a flavorant-carrying adsorbent particle.
FIG. 2 is a schematic cross-sectional view illustrating a filter-tipped cigarette.
FIG. 3 is a schematic cross-sectional view illustrating a filter-tipped cigarette.
FIG. 4 is a partial fractured schematic view illustrating an apparatus for trapping components contained in the mainstream smoke of a cigarette.
FIG. 5 is a graph illustrating a measurement result of the amounts of a flavorant carried and a flavorant-holding material.

### Mode for Carrying Out the Invention

Hereinafter, embodiments of the present invention will be described in detail.

A flavorant-carrying adsorbent particle described comprises an adsorbent core particle and a flavor-generating medium carried on the surface of the adsorbent core particle and including a flavorant and a flavorant-holding material holding the flavorant. The flavorant-holding material is present in an amount of 5 to 20% with respect to the total weight of the flavorant-carrying adsorbent particle, and the flavorant is present in an amount of 10 to 50% with respect to the weight of the flavorant-holding material.

The adsorbent core particle used in the present invention has a BET specific surface area of 700 m²/g or greater. In the present specification, the BET specific surface area refers to a specific surface area obtained according to the publically known BET method. When the BET specific surface area is less than 700 m²/g, it is not possible to sufficiently adsorb the components in the mainstream smoke of a cigarette. In the present invention, the adsorption ability is determined by taking acetone, which is one of the representative components in the mainstream smoke of a cigarette, or the like as a standard. The adsorbent core particle preferably has a BET specific surface area of 1000 m²/g or greater. The BET specific surface area of an adsorbent core particle is generally 2000 m²/g or less.

Examples of such an adsorbent core particle include an activated carbon particle, a zeolite particle, and a silica gel particle.

It is preferable that the adsorbent core particle has an average particle size of 75 to 1000 µm, and for example, an adsorbent core particle having an average particle size of 75 to 600 µm may be suitably used.

The flavor-generating medium covering the surface of the adsorbent core particle includes a flavorant and glucan holding the flavorant.

Examples of the flavorant include a hydrophilic flavorant and a hydrophobic flavorant. Examples of the hydrophilic flavorant include leaf tobacco extract, natural vegetable flavorant (for example, licorice, St. John's bread, plum extract, peach extract, and the like), acids (for example, malic acid, tartaric acid, citric acid, butyric acid, and the like), saccharides (glucose, fructose, isomerized sugar, and the like). Examples of the hydrophobic flavorant include menthol, cocoas (powder, extract, and the like), esters (for example, isoamyl acetate, linalyl acetate, isoamyl propionate, linalyl butyrate, and the like), natural essential oils (as vegetable essential oils, for example, vanilla extract, spearmint, peppermint, cassia, jasmine, and the like; as animal essential oils, for example, musk, ambergris, civet, castoreum, and the like), and single flavors (for example, anethole, limonene, linalool, eugenol, vanillin, and the like) .

The holding material holding the flavorant contains a film forming material and an emulsifying agent as needed. The representative examples of the film forming material used in the present invention is glucan, and examples of glucan include pullulan, maltodextrin, and hydroxypropyl cellulose. Glucan is water-soluble. A film forming material such as glucan is able to hold a flavorant by embedding the flavorant in the film formed of the film forming material. The film forming material can be used for any of a hydrophilic flavorant and a hydrophobic flavorant.

Examples of the emulsifying agent include glycerin fatty acid ester, sucrose fatty acid ester (sugar ester), sorbitan fatty acid ester, propylene glycol fatty acid ester, and lecithin. Molecules of the emulsifying agent hold a hydrophobic flavorant in an aqueous medium by causing the hydrophobic group of the molecule to adsorb around the oil droplet of the hydrophobic flavorant, and hold the hydrophobic flavorant after drying as well.

In the flavorant-carrying adsorbent particle described, the flavorant-holding material is present in an amount of 5 to 20%, and preferably 5 to 10%, with respect to the total weight of the flavorant-carrying adsorbent particle. In addition, the flavorant is present in an amount of 10 to 50% with respect to the weight of the flavorant-holding material.

The flavorant-carrying adsorbent particle described may be prepared by spraying a liquid flavor-emitting composition containing the flavorant and the flavorant-holding material onto the adsorbent core particle while stirring the adsorbent core particle under reduced pressure.

The flavorant contained in the liquid flavor-emitting composition is the same as those described above, and the flavorant-holding material is also the same as those described above.

When the liquid flavor-emitting composition contains only a hydrophilic flavorant as a flavorant, it is preferable that the liquid flavor-emitting composition contains glucan as a film forming material and a hydrophilic flavorant, and further contains water as a solvent for dissolving glucan and the hydrophilic flavorant.

When the liquid flavor-emitting composition contains a hydrophobic flavorant as a flavorant (for example, when the liquid flavor-emitting composition contains only a hydrophobic flavorant as a flavorant, or when the liquid flavor-emitting composition contains a hydrophobic flavorant as well as a hydrophilic flavorant as a flavorant), it is preferable that the liquid flavor-emitting composition contains glucan as a film forming material, water as the solvent of glucan, a hydrophobic flavorant (and a hydrophilic flavorant), an oily solvent for dissolving the hydrophobic flavorant (for example, a vegetable oil or a saturated fatty acid triglyceride, preferably a medium chain saturated fatty acid triglyceride), and an emulsifying agent. When this composition contains a hydrophilic flavorant in addition to the hydrophobic flavorant, the hydrophilic flavorant dissolves in water.

In the production of the flavorant-carrying adsorbent particle, it is preferable that the adsorbent core particle is under reduced pressure of 12.3 kPa or lower, for example, under reduced pressure of 7.4 to 12.3 kPa, during spraying the liquid flavor-emitting composition. Moreover, at that time, it is preferable that the adsorbent core particle is at a temperature of 60°C or lower, for example, at a temperature of 40 to 60°C. By spraying the liquid flavor-emitting composition containing the flavorant and the flavorant-holding material under reduced pressure, there are benefits that a large amount of the flavorant can be carried on the adsorbent core particle and also that a flavor-emitting composition having a high viscosity (for example, a viscosity of about 2 Pa·s) can be sprayed through a spray nozzle.

In order to produce the flavorant-carrying adsorbent particle described, a conical ribbon mixer dryer may be used. The conical ribbon mixer dryer is described in, for example, Jpn. Pat. Appln. KOKAI Publication No. 2003-71263, Jpn. Pat. Appln. KOKAI Publication No. 2003-290641, and Jpn. Pat. Appln. KOKAI Publication No. 2007-229633. In addition, a conical ribbon mixer dryer manufactured by OKAWARA MFG. CO., LTD. is commercially available.

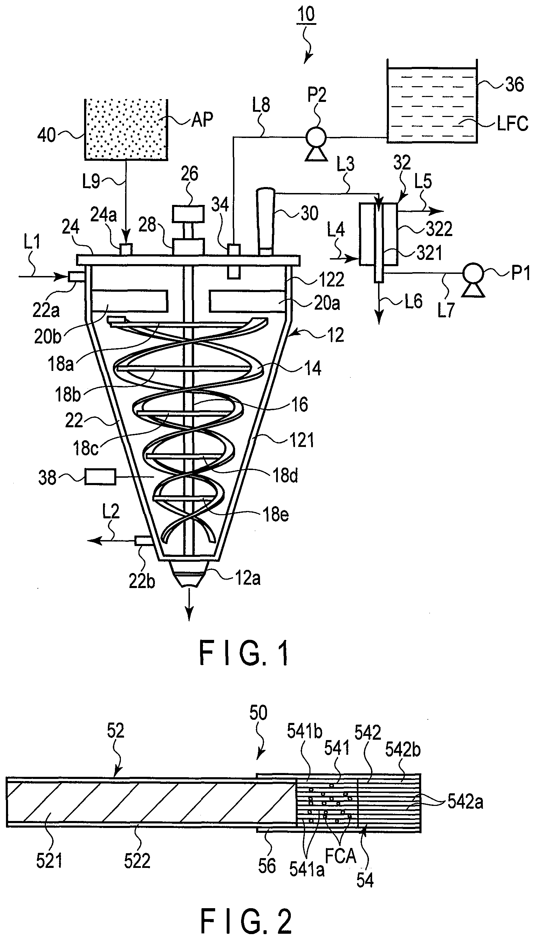

The basic structure of such a conical ribbon mixer dryer will be described with reference to FIG. 1. FIG. 1 illustrates a schematic cross-sectional view illustrating an example of a conical ribbon mixer dryer 10. The conical ribbon mixer dryer 10 comprises a treatment tank 12 for performing mixing and drying treatment therein, which is constituted by an inverted conical part 121 and a cylindrical part 122 united on the inverted conical part 121. The conical ribbon mixer dryer 10 comprises a double helix ribbon rotor blade 14 provided in the inside of the treatment tank 12. The double helix ribbon rotor blade 14 is attached to plural bearing bars (bearing bars 18a to 18e in FIG. 1) which are spaced apart from each other and fixed to a rotating shaft 16 longitudinally extending along the central axis of the treatment tank 12. To the inner wall of the cylindrical part 122 of the treatment tank 12, a pair of vortex flow breakers 20a and 20b (for example, having a platelike structure) is fixed above the rotor blade 14. A treated product (adsorbent particles in the present invention) rises along the inner wall of the treatment tank 12 by the action of the ribbon rotor blade 14, and therefore the vortex flow breakers 20a and 20b cause the treated product to move near the center of the treatment tank 12 and to fall to the lower part of the treatment tank 12.

The outer boundary of the treatment tank 12 is surrounded with a jacket 22. In order to heat the content of the tank, steam is introduced through a steam inlet 22a into this jacket 22 via a line L1, and steam is discharged through a steam outlet 22b to the outside of the system via a line L2.

The upper opening of the tank is closed by a top board 24. On this top board 24, a motor 26 and a reduction gear 28 are installed, and the output shaft of the reduction gear 28 is connected to the rotating shaft 16 provided in the inside of the treatment tank 12. In addition, at the top board 24, an inlet 24a for an object to be treated (adsorbent core particles in the present invention) is provided, and at the bottom of the treatment tank 12, an outlet 12a for treated product (flavorant-carrying adsorbent particles in the present invention) is provided.

Moreover, to the top board 24, a bag filter 30 is attached. Of the content of the treatment tank 12, this bag filter traps particulate matter (adsorbent particles in the present invention) and passes volatile matter (water contained in the flavor-emitting composition in the present invention). The passed volatile matter is led to a condenser 32 via a line L3. The condenser 32 is configured by, for example, a water cooled cooler, and the volatile matter passes through the inside of an inner tube 321. The volatile matter is cooled by cooling water introduced into an outer tube 322 through a line L5, and discharged through a line L6 as a condensate (water). Water introduced into the outer tube 322 is discharged through the line L5. The inner tube 321 is connected to a pressure reducing pump P1 via a line L7, and the inside of the treatment tank 12 is decompressed by the drive of the pressure reducing pump P1.

The basic structure of the conical ribbon mixer dryer is as described above. Further, in order to prepare the flavorant-carrying adsorbent particle, a spray nozzle 34 for introducing the liquid flavor-emitting composition into the treatment tank 12 is provided so as to penetrate through the top board 24. The spray nozzle 34 sprays the liquid flavor-emitting composition LFC into the treatment tank 12 from a container 36 containing the liquid flavor-emitting composition via a line L8 equipped with a liquid feeding pump P2. In addition, in order to measure the temperature of the adsorbent particles in the treatment tank 12, a temperature sensor (for example, thermocouple) 38 is provided at the lower part of the treatment tank 12.

In order to produce the flavorant-carrying adsorbent particles using the conical ribbon mixer dryer 10 illustrated in FIG. 1, the adsorbent core particles AP contained in a container 40 are introduced into the treatment tank 12 via a line L9. The liquid flavor-emitting composition contained in the container 36 is sprayed into the treatment tank 12 from the spray nozzle 34 via the line L8 according to the drive of the liquid feeding pump P2, while heating the inside of the treatment tank 12 by introducing steam having a temperature of 80°C or higher, preferably 100 to 120°C, into the jacket 22, and while stirring the adsorbent particles by rotating the double helix ribbon rotor blade 14 according to the drive of the motor 26. During this spraying, it is preferable that the temperature of the adsorbent particles is maintained at 70°C or lower, and preferably 60°C or lower. This temperature of the adsorbent particles can be maintained by the heat of evaporation taken by water from the adsorbent particles, when water in the liquid flavor-emitting composition introduced into the treatment tank 12 is heated and evaporated by steam of 80°C or higher introduced into the jacket 22.

In the flavorant-carrying adsorbent particles produced in this manner, only water is removed by volatilization during production, but almost all of the components other than water contained in the liquid flavor-emitting composition applied to the adsorbent core particles during production are carried on the adsorbent core particles. Consequently, the liquid flavor-emitting composition applied to the adsorbent core particles contains the flavorant-holding material in an amount of 5 to 20%, preferably 5 to 10%, with respect to the weight of the adsorbent core particles used, and the flavorant in an amount of 10 to 50% with respect to the weight of the flavorant-holding material contained in the liquid flavor-emitting composition. The flavorant-holding material contained in the liquid flavor-emitting composition, particularly, a part of an aqueous solution or aqueous dispersion of the film forming material may be applied to the adsorbent core particles in advance. The advance application of a part of the aqueous solution or aqueous dispersion of the film forming material makes it possible to suppress the temperature of the adsorbent core particles rising at the initial stage of production of the flavorant-carrying adsorbent particle and also suppress the generation of fine powder from the adsorbents.

The flavorant-carrying adsorbent particle can have, in the initial state, an adsorption ability of 50% or greater with respect to the intrinsic adsorption ability of the adsorbent core particle, preferably an adsorption ability of 70% or greater with respect to the intrinsic adsorption ability of the adsorbent core particle, and more preferably an adsorption ability of 90 to about 100% with respect to the intrinsic adsorption ability of the adsorbent core particle. Here, the initial state refers to a state before the flavorant-carrying adsorbent particle is contacted with the mainstream smoke of a cigarette. As described above, the intrinsic adsorption ability of the adsorbent core particle is determined by taking acetone in the mainstream smoke of a cigarette as a standard. In other words, the flavorant-carrying adsorbent particle is able to immediately adsorb the components contained in the mainstream smoke of a cigarette when the flavorant-carrying adsorbent particle is contacted with the mainstream smoke of a cigarette. As the flavorant-carrying adsorbent particle is contacted with the mainstream smoke of a cigarette, the flavorant-holding material contained in the liquid flavor-emitting composition of the flavorant-carrying adsorbent particle is dissolved by a polar component (particularly, water) contained in the mainstream smoke of a cigarette, and the adsorption ability thereof gradually increases. As a matter of course, during storage, it is rare that the flavorant is emitted from the flavor-generating medium.

A cigarette filter described comprises a filter section including the flavorant-carrying adsorbent particles described. In addition, a filter-tipped cigarette described provides a filter-tipped cigarette comprising a cigarette rod and the filter described which is connected to one end of the cigarette rod.

The cigarette filter may comprise a filter section in which the flavorant-carrying adsorbent particles are dispersed in a general filter raw material, for example, a cellulose acetate fiber tow (bound by a plasticizer such as triacetin). The so-called plain filter section (for example, consisting of a cellulose acetate fiber tow bound by a plasticizer such as triacetin) may be connected to one end of the above filter section. Alternatively, the cigarette filter may comprise two plain filter sections disposed apart from each other and the flavorant-carrying adsorbent particles of the present invention filled in the space between these two plain filter sections.

FIG. 2 is a schematic cross-sectional view of a cigarette (filter-tipped cigarette) 50 equipped with the cigarette filter described. A filter-tipped cigarette 50 comprises a cigarette rod 52 in which a tobacco filler 521, such as cut tobacco, is wrapped with a cigarette paper 522. The cigarette rod 52 is the same as that of a general cigarette.

A filter 54 is attached to one end of the cigarette rod 52. The filter 54 comprises a flavorant-carrying adsorbent particles-containing filter section 541 which is provided so as to be directly connected to one end of the cigarette rod 52, and a plain filter section 542 which is provided at the end of the downstream side of the filter section 541 with respect to the flow direction of the mainstream smoke.

The flavorant-carrying adsorbent particles-containing filter section 541 is, for example, a filter obtained by wrapping a cellulose acetate fiber 541a, in which flavorant-carrying adsorbent particles FCA are dispersed, with a filter wrapping paper 541b, and may be prepared by the same method as that for the preparation of a general charcoal filter.

The plain filter section 542 is, for example, a filter obtained by wrapping a tow of a cellulose acetate fiber 542a with a filter wrapping paper 542b.

The filter 54 consisting of the filter sections 541 and 542 is attached to the cigarette rod 52 by a tipping paper 56 as in the general filter-tipped cigarette.

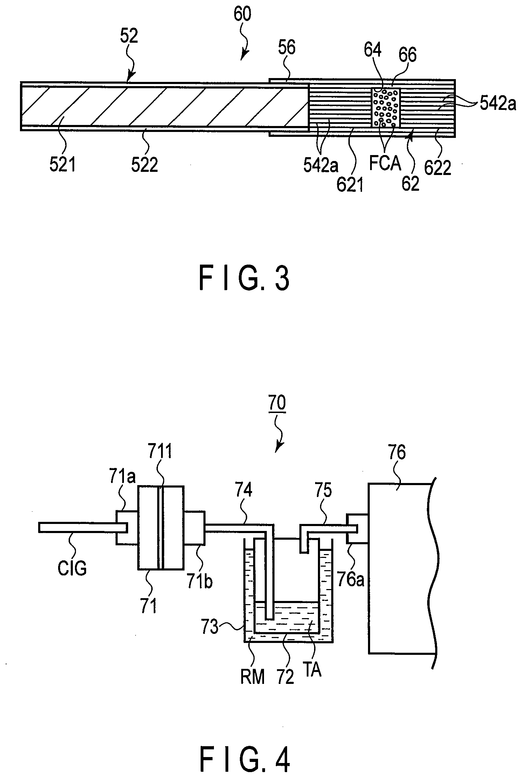

FIG. 3 is a schematic cross-sectional view of a cigarette (filter-tipped cigarette) 60 equipped with the cigarette filter described. In this filter-tipped cigarette 60, a filter 62 attached to a cigarette rod 52 by a tipping paper 56 comprises a first plain filter section 621 directly attached to one end of the cigarette rod 52, and a second plain filter section 622 provided so as to be spaced from the first plain filter section 621, and the whole is wrapped with a filter wrapping paper 66. The first and second plain filter sections 621 and 622 have the same configurations as those illustrated in FIG. 2. The space (cavity) 64 between the first plain filter section 621 and the second plain filter section 622 is filled with the flavorant-carrying adsorbent particles FCA of the present invention.

### Examples

### <Preparation of liquid flavor-emitting composition>

A mixture containing the components listed in Table 1 in the proportions listed in Table 1 was emulsified using an emulsifier (ROBOMICS MARK II manufactured by PRIMIX Corporation) at 7500 rpm for 15 minutes. At this time, the surrounding of the emulsifier was cooled with water such that the temperature of the mixture did not exceed 45°C. In this manner, liquid flavor-emitting compositions A to D were obtained.

COCONARD MT manufactured by Kao Corporation was used as a medium chain fatty acid triglyceride, LP-20E manufactured by The Nisshin OilliO Group, Ltd. was used as lecithin, and P-1570 manufactured by Mitsubishi-kagaku Foods Corporation was used as a sugar ester.

**[Table 1]**

| Components | Mixing proportion (% by weight) | | | |
|---|---|---|---|---|
| | Liquid flavor-emitting composition A | Liquid flavor-emitting composition B | Liquid flavor-emitting composition C | Liquid flavor-emitting composition D |
| Pullulan | 10 | 10 | 10 | 9.5 |
| Water | 79 | 76 | 80 | 72.3 |
| Medium chain fatty acid triglyceride | 5 | 5 | 3 | 4.8 |
| Lecithin | 2 | 2 | 2 | 1.9 |
| Sugar ester | 2 | 2 | 2 | 1.9 |
| l-Menthol | 2 | - | - | 4.8 |
| Vanillin | - | 5 | - | - |
| Cocoa powder | - | - | 3 | - |
| Butyric acid | - | - | - | 4.8 |

### <Preparation of flavorant-carrying adsorbent particle>

### Example 1

Here, RIBOCONE RM-50-SR manufactured by OKAWARA MFG. CO., LTD., was used as a conical ribbon mixer dryer (see FIG. 1). Into the mixer dryer were put 15 kg of activated carbon (KURARAY COAL GGS-H28/70 manufactured by KURARAY CHEMICAL CO., LTD.; average particle size: 0.4 mm; BET specific surface area: 1700 m²/g) and 6 kg of an aqueous solution containing 5% by weight pullulan, and steam of 120°C under a pressure of 200 kPa was circulated in the jacket. The pressure inside the mixer dryer was set at 12.3 kPa and the activated carbon was stirred. After stirring for 5 minutes, 7.5 kg of liquid flavor-emitting composition A was sprayed through the spray nozzle into the mixer dryer over 60 minutes, and then further stirred and dried for 5 minutes. Flavorant-carrying adsorbent particles were taken out of the mixer dryer, immediately put in a continuous fluidized-bed granulation dryer (MIX GRADO 0.5 TYPE manufactured by OKAWARA MFG. CO., LTD.), and subjected to sensible heat exchange and dehumidification of activated carbon particles for 3 minutes, thereby obtaining a product of flavorant-carrying adsorbent particles.

### Example 2

A product of flavorant-carrying adsorbent particles was obtained according to the same procedure as in Example 1 except that liquid flavor-emitting composition B was used instead of liquid flavor-emitting composition A.

### Example 3

A product of flavorant-carrying adsorbent particles was obtained according to the same procedure as in Example 1 except that liquid flavor-emitting composition C was used instead of liquid flavor-emitting composition A.

### Example 4

A product of flavorant-carrying adsorbent particles was obtained according to the same procedure as in Example 1 except that liquid flavor-emitting composition D was used instead of liquid flavor-emitting composition A.

### <Manufacture of filter-tipped cigarette>

A filter-tipped cigarette having a configuration illustrated in FIG. 3 was manufactured. Specifically, the filter-tipped cigarette having a configuration illustrated in FIG. 3 was manufactured according to the following procedure. From a commercially available filter-tipped cigarette product, "Winston Lights", which is equipped with a filter having a cellulose acetate fiber tow as a filter raw material, the cellulose acetate fiber tow of a filter raw material was removed using a pair of tweezers. Then, the vacant space part was filled with a cellulose acetate fiber tow (length: 10 mm; 2.5Y/35000 (that is, single fineness: 2.5 denier; cross-section of filament: Y type; total fineness: 35000 denier)), filled with 30 mg of the flavorant-carrying adsorbent particles obtained in Examples 1 to 4 (in 2 mm of length of the space 64 in the longitudinal direction of the cigarette rod), and finally filled with a cellulose acetate fiber tow (length: 10 mm; 2.5Y/35000). In addition, a filter-tipped cigarette (hereinafter, referred to as a control cigarette) was manufactured in the same manner as above except that 30 mg of no flavorant-carrying activated carbon (KURARAY COAL GGS-H28/70 manufactured by KURARAY CHEMICAL CO., LTD.) was used as it is, instead of the flavorant-carrying adsorbent particles obtained in Examples 1 to 4.

These four kinds of filter-tipped cigarettes were subjected to smoking. As a result, it was confirmed that flavor from the flavorant was emitted in the mainstream smoke, and flavor and taste were stronger compared to the control cigarette. This result indicates that a large amount of a flavorant was carried on an adsorbent core particle by a treatment in a short time.

### Comparative Example

A flavorant-carrying adsorbent particle was prepared according to the same manner as in Example 1 except that a solution containing 5% by weight 1-menthol in ethanol was sprayed onto activated carbon. A filter-tipped cigarette was manufactured in the same manner as above using this flavorant-carrying adsorbent particle. This filter-tipped cigarette was subjected to smoking, but flavor from the flavorant was not confirmed.

### Experimental Example

The filter-tipped cigarette manufactured in Example 4 was subjected to smoking, and the adsorption ability of the filter with respect to acetone in the mainstream smoke was investigated.

In this experiment, an apparatus 70 illustrated in FIG. 4 was used in order to trap components contained in the mainstream smoke of a cigarette. This apparatus 70 has a trapping device for trapping particulate matter 71 comprising a Cambridge filter 711 (a diameter of 47 mm), a tobacco mainstream smoke inflow port 71a, which holds a cigarette CIG, and a tobacco mainstream smoke outflow port 71b. Further, the apparatus 70 comprises an impinger 72. In the impinger 72, a trapping agent solution TA for trapping gaseous components in the tobacco mainstream smoke is contained. In the present experiment, 10 mL of methanol containing 200 ppm of anethole, which was an internal standard substance, was put therein as the trapping agent solution TA. The impinger 72 was accommodated in a Dewar bottle 73 containing a refrigerant RM for maintaining the trapping agent solution TA at a low temperature. In the present experiment, a mixture of dry ice and isopropanol was used as the refrigerant RM, and the temperature of the trapping agent solution TA was maintained at -70°C or lower during the experiment. The outflow port 71b of the trapping device 71 for trapping particulate matter was connected with a pipe line 74 extending into the trapping agent solution TA in the impinger 72. In addition, a suction port 76a of an automatic smoking machine 76 was connected with a pipe line 75 extending to the upper space of the trapping agent solution TA in the impinger 72. When a cigarette was ignited and the automatic smoking machine 76 was driven, the pressure inside the impinger 72 was reduced by suction via the pipe line 75. In accordance with the pressure reduction, the mainstream smoke of the tobacco passed through the Cambridge filter 711 in the trapping device 71. At that time, the particulate matter in the mainstream smoke of the tobacco was trapped in the Cambridge filter 711, and the particulate matter-deprived mainstream smoke was introduced into the trapping agent solution TA in the impinger 72 via the pipe line 74. Bubbling occurs in the trapping agent solution TA, and the gaseous matter in the mainstream smoke is trapped in the trapping agent solution TA.

In the present experiment, the cigarette manufactured in Example 4 was set to the trapping device 71, and subjected to smoking using the automatic smoking machine 76 under the standard smoking conditions defined by International Organization for Standardization (1 puff: 35 mL puff for 2 seconds, puff interval: 58 seconds). After smoking was completed, the agent solution in the impinger 72 was transferred to a serum vial, and the Cambridge filter 711, in which the particulate matter was trapped, was also put into the serum vial. It was subjected to a shaking extraction at 250 times/min for 30 minutes. 1 mL of the obtained extract was put into a vial for gas chromatograph-mass spectrometer (GC/MS), and the components in the mainstream smoke were analyzed under the following conditions.

Analytical conditions of the components in the mainstream smoke:
- GC/MS: HP 7890/5975 manufactured by Hewlett-Packard development Company, D. P.
- Column: DB-1701
- Flow rate of column: 1.2 mL/min
- Temperature raising condition: The temperature was maintained at 60°C for 5 minutes, and then raised to 160°C by 5°C/min and to 250°C by 10°C/min, and then maintained at 250°C for 30 minutes.
- Ratio of injection: split 10: 1; Inlet: 220°C; Flow rate: 12 mL/min; Total flow rate: 16.2 mL/min
- MS condition: Scan parameter: 33.0 to 200.0; Threshold: 50; MS ion source: 230°C; MS quadrupole: 150°C.

The same analysis was also performed in a cigarette having a plain filter (that is, the cigarette having a cigarette rod of a commercially available filter-tipped cigarette product, "Winston Lights", and a plain filter consisting of a cellulose acetate fiber tow (length: 20 mm; 2.5Y/70000) connected to one end thereof; hereinafter, this will be referred to as a "standard cigarette") and the above control cigarette.

From the analysis results of the filter-tipped cigarette of Example 4, the control cigarette, and the standard cigarette, the value of acetone peak area for each of the cigarettes was calculated. Each of the values of acetone peak area for the filter-tipped cigarette of Example 4 and the control cigarette was divided by the value of acetone peak area for the standard cigarette. The obtained value was multiplied by 100 to obtain the acetone decreasing rate (%) for each of the filter-tipped cigarette of Example 4 and the control cigarette. The acetone decreasing rate (%) was subtracted from 100% to obtain the acetone adsorption rate. As a result, the acetone adsorption rate with respect to the control cigarette was 48%, and the acetone adsorption rate with respect to the filter-tipped cigarette of Example 4 was 45%. This result indicates that the flavorant-carrying adsorbent particle of Example 4 has an adsorption ability corresponding to about 94% with respect to the intrinsic adsorption ability of the adsorbent core particle. That is, the adsorption ability of the filter-tipped cigarette of Example 4 was a little lower than that of the control cigarette including no flavorant-carrying activated carbon, but almost the same level.

The filter-tipped cigarettes manufactured in Examples 1 to 3 also exhibited the same level of adsorption ability as that of the filter-tipped cigarette of Example 4.

### Reference Example

Two kinds of filter-tipped cigarettes were manufactured in the same manner as the above control cigarette except that the activated carbon was substituted with 30 mg of activated carbon having a specific surface area of 700 m²/g and 1000 m²/g, respectively. The acetone adsorption rate with respect to these cigarettes was investigated in the same manner as above. As a result, the acetone adsorption rate with respect to the former cigarette was 23%, and the acetone adsorption rate with respect to the latter cigarette was 34%. From this result, it is found that activated carbon having a specific surface area of 700 m²/g or greater exhibits an adsorption effect with respect to the components contained in the mainstream smoke of a cigarette.

### <Measurement of amounts of flavorant carried and flavorant-holding material>

In regard to the flavorant-carrying particles obtained in Examples 1 to 4, the amount of the flavorant carried and the amount of the flavorant-holding material were measured.

The flavorant-carrying particles of Comparative Examples were prepared according to Examples 1 to 3 of the Prior Art Document (WO 2008/072627). In regard to the flavorant-carrying particles thus prepared, the amount of the flavorant carried and the amount of the flavorant-holding material were measured in the same manner as those for Examples 1 to 4.

The flavorant-carrying particles according to Comparative Examples were prepared as follows.

### Comparative Example 1 (Example 1 of the Prior Art Document)

2% by weight of coffee oil was added to a previously prepared aqueous dispersion of pullulan containing 10% by weight of pullulan. The mixture was vigorously stirred in an emulsifier (emulsifier rotation speed of 2500 rpm), thus preparing a flavorant dispersion. On the other hand, 100 g of calcium carbonate particles having an average particle size of 250 µm were charged into a fluidized-bed granulation dryer, and immediately the flavorant dispersion was intermittently sprayed onto the particles (in repeated cycles of spraying for 1 minute then no spraying for 30 minutes), while blowing warm air of 75°C at a flow rate of 0.6 m/sec. In this manner, total 10 g of flavorant dispersion was sprayed onto the surface of the calcium carbonate particles, followed by drying. Thereafter, the inside of the fluidized bed was immediately cooled to room temperature, thus obtaining desired flavor beads.

### Comparative Example 2 (Example 2 of the Prior Art Document)

100 g of calcium carbonate particles having an average particle size of 250 µm were charged into a fluidized-bed granulation dryer, and an aqueous flavorant mixture solution containing 1% by weight of a tobacco flavorant, to which vanillin was added, and 9% by weight of pullulan, was continuously sprayed onto the particles, while blowing warm air of 30°C at a flow rate of 1.0 m/sec. In this manner, total 5 g of the aqueous mixture solution was sprayed onto the surface of the calcium carbonate particles, followed by drying. Thereafter, the temperature of the warm air was immediately decreased to room temperature, and the particles were cooled at a flow rate of 0.4 m/sec, thus obtaining desired flavor beads.

### Comparative Example 3 (Example 3 of the Prior Art Document)

1% by weight of coffee oil and 0.5% by weight of lecithin were added to a previously prepared aqueous dispersion of pullulan containing 10% by weight of pullulan. The mixture was vigorously stirred in an emulsifier (emulsifier rotation speed of 7500 rpm, 15 minutes), thus preparing a flavorant dispersion. On the other hand, 300 g of ground coffee bean particles having an average particle size of 250 µm to 1.4 mm were charged into a rotating fluidized-bed granulation dryer (SFC-MINI manufactured by FREUND Corporation), and the perforated rotating disk at the bottom and the mixer blades for preventing lumping were rotated at about 500 rpm and about 400 rpm, respectively, while blowing warm air of 75°C at a flow rate of 0.6 m/sec, thereby forming a fluidized bed of the ground coffee bean particles. The flavorant dispersion kept at 40°C was continuously sprayed onto the fluidized bed, thereby spraying total 90 g of flavorant dispersion on the surface of the ground coffee bean particles, followed by drying. Thereafter, the temperature of the warm air was immediately decreased to room temperature, and the particles were cooled at a flow rate of 0.4 m/sec, thus obtaining desired flavor beads.

The amount of the flavorant and the amount of the flavorant-holding material were measured as follows.

### Measurement of flavorant

The flavorant-carrying particles were subjected to a shaking extraction using a mixture of purified water and methanol. The obtained extract was subjected to a gas chromatograph-mass spectrometer (GC/MS) to measure the flavorant.

### Measurement of flavorant-holding material

The flavorant-carrying particles was weighed (weight A), and heated and dried for the purpose of removing water in the particles (post-drying weight B). Purified water was added to the particles after drying, and the shaking extraction was performed, thereby eluting the flavorant-holding material. The particles were further heated and dried (post-drying weight C). The difference between the weight C and weight A was regarded as the amount of the flavorant-holding material.

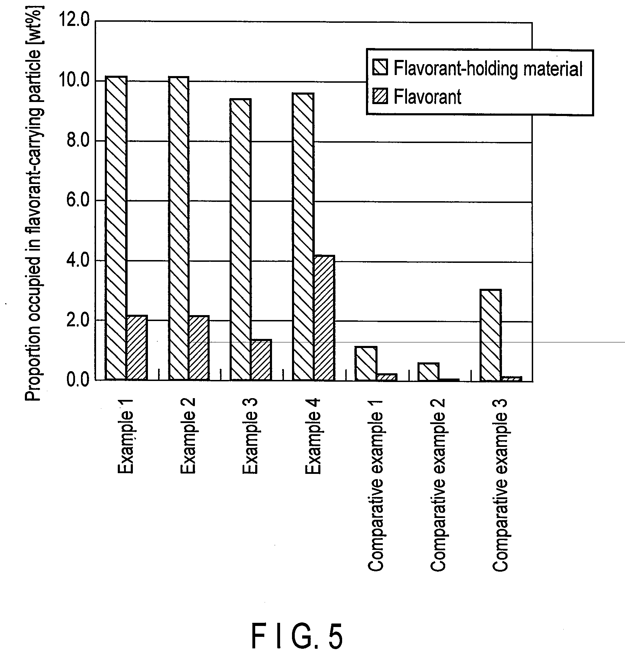

The measurement result is illustrated in FIG. 5. FIG. 5 illustrates the amount of the flavorant carried and the amount of the flavorant-holding material in a proportion (% by weight) with respect to the total weight of the flavorant-carrying particles. FIG. 5 indicates that the flavorant-carrying particles produced in a method of the present invention carry a larger amount of a flavorant than the flavorant-carrying particles according to the Comparative Examples.

In addition, it was possible to prepare the flavorant-carrying particles according to the present invention by a treatment in a shorter time than the flavorant-carrying particles according to the Comparative Examples. List of Reference Signs

10: Conical ribbon mixer dryer, 12: Treatment tank, 121: Inverted conical part of treatment tank, 122: Cylindrical part of treatment tank, 12a: Outlet for treated product, 14: Double helix ribbon rotor blade, 16: Rotating shaft, 18a to 18e: Bearing bar, 20a and 20b: Vortex flow breaker, 22: Jacket, 22a: Steam inlet, 22b: Steam outlet, 24: Top board, 26: Motor, 28: Reduction gear, 24a: Inlet for object to be treated, 30: Bag filter, 32: Condenser, 321: Inner tube of condenser, 322: Outer tube of condenser, P1: Pressure reducing pump, 34: Spray nozzle, 36: Container for liquid flavor-emitting composition (LFC), P2: Liquid feeding pump, 38: Temperature sensor, 40: Container for adsorbent core particles (AP),
50 and 60: Filter-tipped Cigarette, 52: Cigarette rod, 521: Tobacco filler, 522: Cigarette paper,
54 and 62: Filter, 541: flavorant-carrying adsorbent particles-containing filter section, 542: Plain filter section, FCA: Flavorant-carrying adsorbent particles, 541a and 542a: Cellulose acetate fiber,
541b, 542b, and 66: Filter wrapping paper, 56: Tipping paper, 621: First plain filter section, 622: Second plain filter section, 64: Cavity,
70: Apparatus for trapping components contained in mainstream smoke of cigarette, 711: Cambridge filter, CIG: Cigarette, 71: Trapping device for trapping particulate matter, 71a: Tobacco mainstream smoke inflow port, 71b: Tobacco mainstream smoke outflow port, 72: Impinger, TA: Trapping agent solution for trapping gaseous components in tobacco mainstream smoke, 73: Dewar bottle, RM: Refrigerant, 74 and 75: Pipe line, 76: Automatic smoking machine, 76a: Suction port.

## Claims

1. A method for producing a flavorant-carrying adsorbent particle, comprising:
spraying a liquid flavor-emitting composition containing a flavorant and glucan onto an adsorbent core particle having a BET specific surface area of 700 m²/g or greater while stirring the adsorbent core particle under reduced pressure.

2. The method for producing a flavorant-carrying adsorbent particle according to claim 1, wherein the liquid flavor-emitting composition contains the glucan in an amount of 5 to 20% with respect to a total weight of the flavorant-carrying adsorbent particle, and the flavorant in an amount of 10 to 50% with respect to a weight of the glucan.

3. The method for producing a flavorant-carrying adsorbent particle according to claim 1 or 2, wherein the reduced pressure is a pressure of 12.3 kPa or lower.

4. The method for producing a flavorant-carrying adsorbent particle according to any one of claims 1 to 3, wherein the adsorbent core particle is maintained at a temperature of 60°C or lower during the spraying.

## Patentansprüche

1. Verfahren zur Herstellung eines einen Aromastoff tragenden Adsorptionspartikels, umfassend:
Sprühen einer flüssigen aromabildenden Zusammensetzung, die ein Aromastoff und Glucan enthält, auf ein Adsorptionskernteilchen mit einer BET-spezifischen Oberfläche von 700 m²/g oder mehr, während das Adsorptionskernteilchen unter reduziertem Druck gerührt wird.

2. Verfahren zur Herstellung eines einen Aromastoff tragenden Adsorptionspartikels nach Anspruch 1, worin die flüssige aromatisierende Zusammensetzung das Glucan in einer Menge von 5 bis 20 %, bezogen auf ein Gesamtgewicht des aromatragenden Adsorptionspartikels, und den Aromastoff in einer Menge von 10 bis 50 %, bezogen auf ein Gewicht des Glucans, enthält.

3. Verfahren zur Herstellung eines einen Aromastoff tragenden Adsorptionspartikels nach Anspruch 1 oder 2, worin der reduzierte Druck ein Druck von 12,3 kPa oder weniger ist.

4. Verfahren zur Herstellung eines einen Aromastoff tragenden Adsorptionspartikels nach einem der Ansprüche 1 bis 3, worin das Adsorptionskernteilchen während des Sprühens auf einer Temperatur von 60°C oder niedriger gehalten wird.

## Revendications

1. Procédé pour produire une particule adsorbante portant un arôme, comprenant :
la pulvérisation d'une composition liquide émettant un arôme, contenant un arôme et du glucane, sur une particule de coeur adsorbante ayant une surface spécifique BET de 700 m²/g ou plus cependant que la particule de coeur adsorbante est agitée sous pression réduite.

2. Procédé pour produire une particule adsorbante portant un arôme selon la revendication 1, dans lequel la composition liquide émettant un arôme contient le glucane en une quantité de 5 à 20 % par rapport au poids total de la particule adsorbante portant un arôme, et l'arôme en une quantité de 10 à 50 % par rapport au poids du glucane.

3. Procédé pour produire une particule adsorbante portant un arôme selon la revendication 1 ou 2, dans lequel la pression réduite est une pression de 12,3 kPa ou moins.

4. Procédé pour produire une particule adsorbante portant un arôme selon l'une quelconque des revendications 1 à 3, dans lequel la particule de coeur adsorbante est maintenue à une température de 60°C ou moins durant la pulvérisation.
